# EUROPEAN PATENT APPLICATION

(11) **EP 1 806 908 A2**
(43) Date of publication of application: **11.07.2007**
(21) Application number: 06126621.9
(22) Date of filing: 20.12.2006
(51) Int. Cl.: H04M 1/02

(54) **Apparatus and method for sensing folder rotation status in a portable terminal**

(30) Priority: 04.01.2006 KR 20060000997
(71) Applicant: Samsung Electronics Co., Ltd., Suwon-si, Gyeonggi-Do (KR)
(72) Inventor: Kang, Byung-Han, Yeongtong-gu, Suwon-si, Gyeonggi-do (KR)
(74) Representative: Grünecker, Kinkeldey, Stockmair & Schwanhäusser Anwaltssozietät

(57) **Abstract**

An apparatus and a method for sensing rotation angle of a folder in a portable terminal are provided. In the apparatus and method, a first motion sensor measures a roll, which is an up/down rotation angle of a main body and a pitch, which is a left/right rotation angle of the main body. A second motion sensor measures a roll, which is an up/down rotation angle of a folder and a pitch which is a left/right rotation angle of the folder. A controller measures up/down/left/right rotation status of the folder based on the main body using the difference between the rolls and pitches measured from the first motion sensor and the second motion sensor.

## Description

The present invention relates generally to an apparatus and a method for measuring rotation status of a folder based on a main body, and in particular, to an apparatus and a method for measuring rotation status of a folder based on a main body by measuring a rotation angle difference between a rotation angle measured by a first motion sensor disposed at the main body and a rotation angle measured by a second motion sensor disposed at the folder in a folder-type portable terminal.

Portable terminals such as a mobile communication terminal and a Personal Digital Assistant (PDA) are becoming widely used. In addition to handling telephone calls or scheduling management tasks, portable terminals are providing various additional functions, for example, taking a picture by way of a built-in digital camera, watching a satellite broadcast, playing a game and etc. Also, a user can control the portable terminal by using a built-in motion sensor, which senses a movement of the portable terminal without using a keypad or a touch screen.

For example, if the portable terminal is shaken up and down at least two times a motion sensor in the portable terminal senses an order to delete spam messages and transfers the order to a controller for deleting spam messages. If a user describes a number with the portable terminal, the portable terminal recognizes the number as a dialing number and makes a call to the corresponding telephone number. Also, if a user shakes the portable terminal, it can produce sounds such as a tambourine or other percussion instruments. In particular, in the case of using emoticon (i.e., icons that represents emotion), when a user describes '0' with the portable terminal, the portable terminal can say "oh yes", or when a user describes 'X' with the portable terminal, the portable terminal can say "oh no". Additionally, if the portable terminal is in a MP3 player mode, a user can control functions such as selecting other music by simply moving the portable terminal up and down. In addition, a user can read a text using scrolling function not by a button, but by tilting of the portable terminal. A user can also play a game by an operation method of simply moving or tilting the portable terminal without button manipulation.

The portable terminal performing the game function using the motion recognition of the portable terminal needs a motion sensor for sensing the motion information of the portable terminal including tilting slope and rotation angle. A variety of motion sensors can be used, but the motion sensor using an accelerometer is widely used.

When a user can control the portable terminal with the motion sensor, a reference slope relative to a specific status is needed. The reference slope is the standard slope. The motion sensor senses a slope of a specific position of the portable terminal relative to the reference slope. Here, measuring the reference slope requires a fixed portable terminal as well as some waiting time. Therefore, if it is necessary to change the reference slope during the operation of the motion sensor, the portable terminal must stop the operation of the motion sensor and re-measure the reference slope.

Accordingly, it is necessary to provide a method and an apparatus using motion sensors without re-measuring a reference slope and the waiting time for re-measuring.

The object of the present invention is to provide an apparatus and a method for sensing rotation status of a folder based on a main body in a portable terminal.

This object is solved by the subject matter of the independent claims.

Preferred embodiments are defined in the dependent claims.

An aspect of the present invention is to provide an apparatus and a method for measuring rotation status of up/down/left/right of a folder where a display unit is positioned, based on a main body where a keypad is positioned in a folder-type portable terminal using a motion sensor.

Another aspect of the present invention is to provide an apparatus and a method for measuring rotation status of a folder based on a main body by measuring a rotation angle difference between a rotation angle measured by a first motion sensor disposed at the main body and a rotation angle measured by a second motion sensor disposed at the folder in a portable terminal.

According to an aspect of the present invention for achieving the above objects, there is provided an apparatus for sensing rotation status of a folder in a portable terminal including a first motion sensor for measuring a roll which is an up/down rotation angle of a main body and a pitch which is a left/right rotation angle of the main body, a second motion sensor for measuring a roll which is a up/down rotation angle of a folder and a pitch which is a left/right rotation angle of the folder, a controller for measuring up/down/left/right rotation status of the folder based on the main body using the difference between the rolls and the pitches, measured from the first motion sensor and the second motion sensor.

According to another aspect of the present invention for achieving the above objects, there is provided a method for sensing rotation status of a folder in a portable terminal, when the measurement of a folder rotation is required, a roll which is an up/down rotation angle of a main body and a pitch which is a left/right rotation angle of the main body are measured. A roll, which is an up/down rotation angle of a folder and a pitch, which is a left/right rotation angle of the folder are measured. If the rolls and pitches have been measured, an up/down rotation angle between the main body and the folder and a left/right rotation angle between the main body and the folder are measured, using the difference between the roll and pitch of the folder and those of the main body.

The present invention will become more apparent from the following detailed description when taken in conjunction with the accompanying drawings in which:
FIG. 1A is a perspective view illustrating a portable terminal having a folder opened using two motion sensors according to the present invention;
FIG. 1B is a perspective view illustrating a portable terminal having a folder opened and left rotated using two motion sensors according to the present invention;
FIG. 2 is a block diagram illustrating a portable terminal having two motion sensors according to the present invention;
FIG. 3 is an illustration of a portable terminal showing a method of measuring rotation status in a motion sensor; and
FIG. 4 is a flowchart illustrating a procedure of sensing rotation status of a folder in a portable terminal according to the present invention.

Preferred embodiments of the present invention will be described herein below with reference to the accompanying drawings. In the following description, a detailed description of well-known functions or constructions incorporated herein has been omitted for clarity and conciseness.

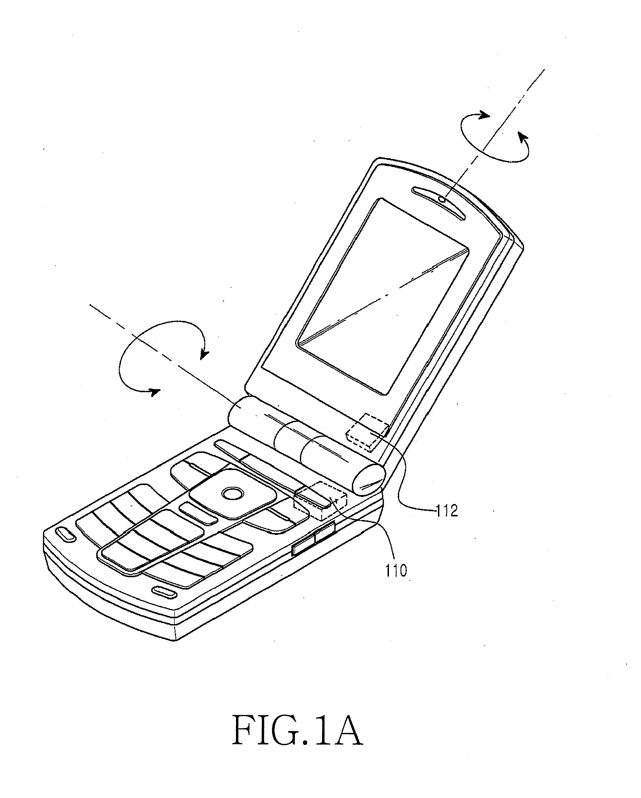

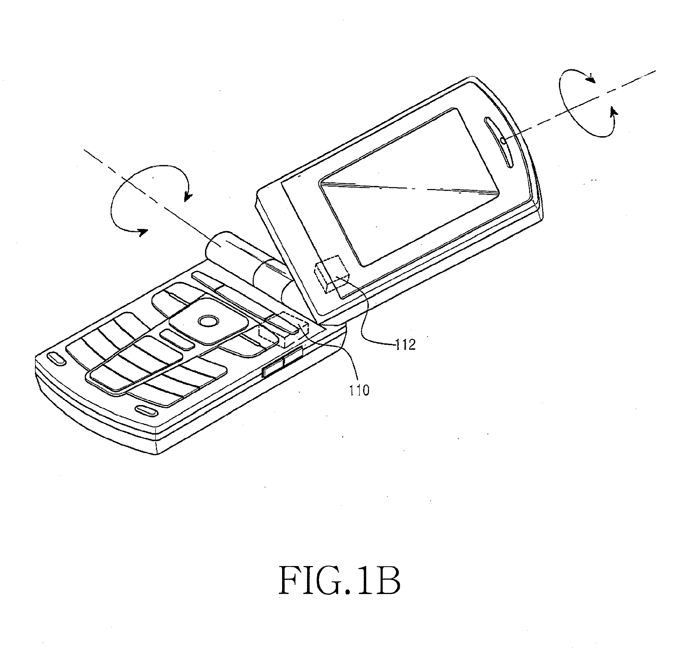

Hereinafter, an apparatus and a method for measuring rotation status of up/down/left/right of a folder having a display unit based on a main body having a keypad in a folder-type portable terminal using a motion sensor will be described with reference to FIGs. 1 to 4.

FIG. 1A is a perspective view illustrating a portable terminal having a folder opened using two motion sensors according to the present invention.

FIG. 1B is a perspective view illustrating a portable terminal having a folder opened and left rotated using two motion sensors according to the present invention.

Referring to FIGs. 1A and 1B, a portable terminal, which is a folder-type portable terminal, can rotate a folder up/down/right/left. The portable terminal has a first motion sensor 110 disposed at a portion of the main body and a second motion sensor 112 disposed at a portion of the folder.

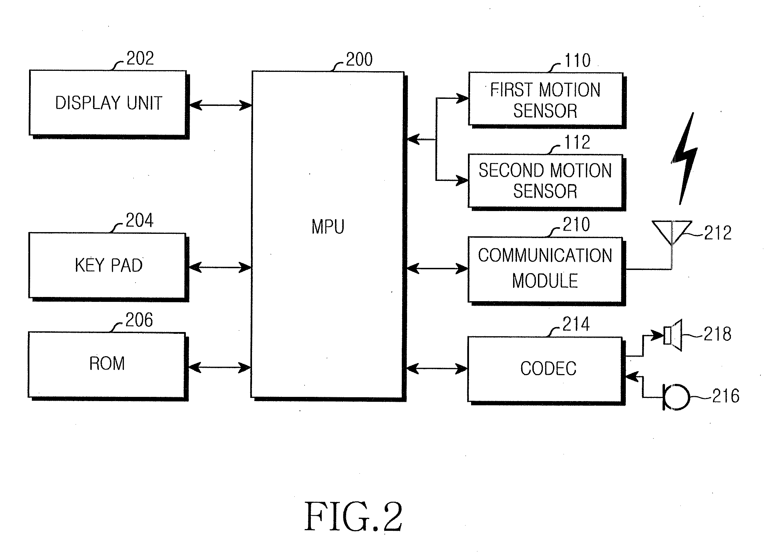

A configuration of the portable terminal shown in FIGs. 1A and 1B and a method for sensing an up/down rotation angle and a left/right rotation angle of the folder based on the main body using a motion sensor will be described with reference to FIG. 2 below.

FIG. 2 is a block diagram illustrating a folder-type portable terminal having two motion sensors according to the present invention. The portable terminal can include, but not limited to, a cellular phone, a Personal Communication System (PCS) Phone, a Personal Data Assistant (PDA), International Mobile Telecommunication-2000 (IMT2000) terminal and the like. Hereinafter, a general function configuration of the above examples will be described.

Referring to FIG. 2, the portable terminal of the present invention includes a Micro-Processor Unit (MPU) 200, a display unit 202, a keypad 204, a memory (e.g., ROM) 206, a first motion sensor 110, a second motion sensor 112, a communication unit 210, an antenna 212, a CODEC 214, a microphone 216 and a speaker 218.

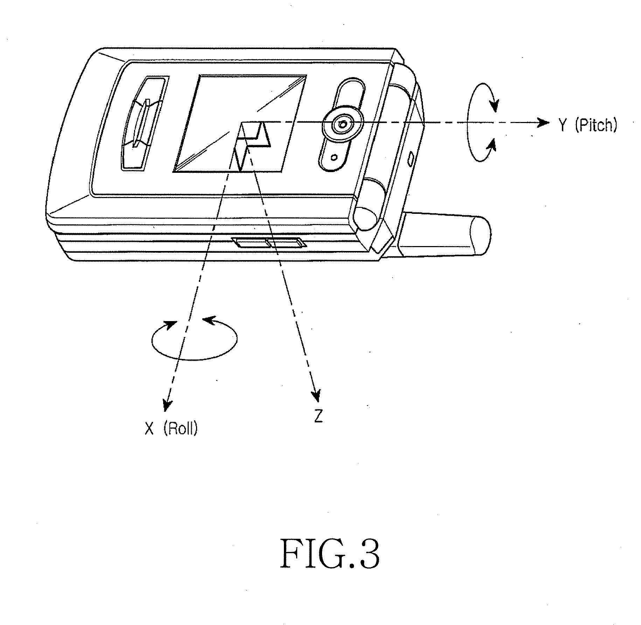

The MPU 200, acting as a controller, controls the overall operation of the mobile communication terminal with a function for controlling an alarm by using motion recognition. For example, the MPU 200 is responsible for processing and controlling voice and data communication. In addition, the MPU 200 processes a function for measuring up/down/left/right rotation status (angle) of a folder by comparing rotation status measured from a first motion sensor with a second motion sensor. A detailed description of the typical processing and controlling operation of the MPU 200 will not be described. Rotation measurement of motion sensors for measuring rotation status of the folder will be described in detail with reference to FIG. 3.

A display unit 202 displays status information, limited number of characters, moving pictures and still pictures and the like. The display unit 202 can be a Liquid Crystal Display (LCD).

A keypad 204 includes numeric keys and a plurality of function keys, such as a MENU key, a CANCEL (REMOVE) key, an ENTER key, a TALK key, an END key, an Internet connection key, and Navigation keys (▲/▼/◄/►). The key input data corresponding to a key pressed by the user is transmitted to the MPU 200.

A memory 206 stores software for controlling overall operation of the portable terminal and temporarily stores data created during the operation of the portable terminal. Also, the memory 206 stores data, for example phone numbers, Short Message Service (SMS) messages, image data, etc.

A first motion sensor 110 is disposed at a main body of the portable terminal where the keypad is positioned. The first motion sensor 110, which is a device for measuring the motion status, rotation angle, of the main body of the portable terminal, measures acceleration along the X, Y and Z axes, and then measures a slope (tilt) and movement of the portable terminal using variation of the accelerations. The first motion sensor 110 identifies a motion of the portable terminal based on the measured values.

A second motion sensor 112 is disposed at a folder of the portable terminal where the display unit is positioned. The second motion sensor 112, which is a device for measuring the motion status, rotation angle, of the folder of the portable terminal, measures acceleration of X, Y and Z axes, and then measures a slope (tilt) and movement of the portable terminal using variation of the accelerations. The second motion sensor 112 identifies a motion of the portable terminal based on the measured values.

A communication unit 210, in case of the data reception, decreases a frequency of a Radio Frequency (RF) signal received through the antenna 212, and performs channel decoding for receiving data. For the data transmission, the communication unit 110 performs channel coding for transmitting data, increases a frequency, and transmits to the antenna 212.

A Coder-Decoder (CODEC) 214 connected to the MPU 200, a microphone 116, and a speaker 118 connected to the CODEC are audio input/output units for use in voice communication. The MPU 200 produces Pulse Code Modulation (PCM) data and the CODEC 214 converts the PCM data into analog audio signals. The analog audio signals are outputted through the speaker 218. Also, the CODEC 214 converts analog audio signals received through the microphone 216 into PCM data and provides the MPU 200 with the PCM data.

FIG. 3 is an illustration of a portable terminal showing a method for measuring rotation status in a motion sensor.

The first motion sensor 110 in the main body and the second motion sensor 112 in the folder measure a direction based on respectively perpendicular X, Y and Z axes. When a Z-axis lies in the direction of gravity, an X-axis is an axis for sensing up/down rotation status of the portable terminal. The rotation of the X-axis is called a roll. When a Y-axis lies in the direction of gravity, the Y-axis is an axis for sensing left/right rotation status of the portable terminal. The rotation of the Y-axis is called a pitch.

Here, the pitch of the first motion sensor 110 is P1, the roll of the first motion sensor 110 is R1, the pitch of the second motion sensor 112 is P2, and the roll of the second motion sensor 112 is R2. Then, up/down rotation status (angle) of the folder of the portable terminal, that is, an opened angle of the folder, is measured from the difference between R2 and R1, and left/right rotation status of the folder of the portable terminal, that is, an twisted angle between the folder and the main body, is measured from the difference between P2 and P1.

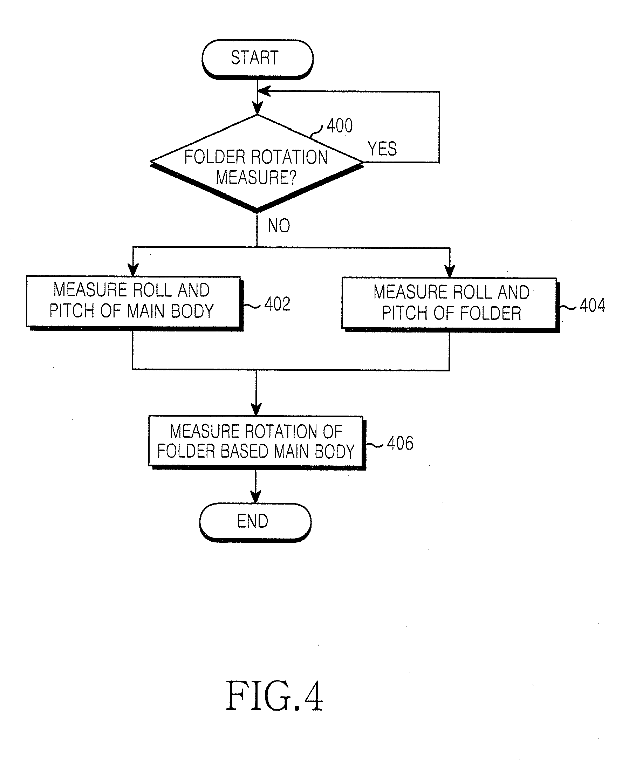

Hereinafter, a method for sensing rotation status of the folder in the portable terminal according to the present invention will be described with reference to FIG. 4 below. FIG. 4 is a flowchart illustrating a procedure for sensing rotation status of a folder in a portable terminal according to the present invention.

In step 400, the portable terminal checks whether a folder rotation measurement event occurs. If the folder rotation measurement event has occurred, the portable terminal wait until the folder rotation measurement event occurs. If the folder rotation measurement event has occurred, the portable terminal measures a roll which is an up/down rotation angle of a main body and a pitch which is a left/right rotation angle of the main body using the first motion sensor in step 402. ln step 404, the portable terminal measures the roll which is an up/down rotation angle of a folder and the pitch which is a left/right rotation angle of the folder using the second motion sensor.

If the rolls and pitches of the main body and folder are measured, respectively, it is proceeded to step 406 to subtract the roll and pitch of the main body from the roll and pitch of the folder and measure up/down and left/right rotation angles between the main body and the folder.

As described above, the present invention relates to a method and an apparatus for measuring rotation status of a folder based on a main body by measuring the difference between rotation angle measured by a motion sensor disposed at the main body and a motion sensor disposed at the folder. It is unnecessary to measure a reference slope because the present invention measures a rotation angle of the folder based on the main body.

The present invention can also include computer readable codes on a computer readable medium. The computer readable medium can include any data storage device that can store data that can be read by a computer system. Examples of a computer readable medium include magnetic storage media (such as, ROM, floppy disks, hard disks, among others), optical recording media (such as, CD-ROMs, or DVDs), and storage mechanisms such as carrier waves (such as, transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

While the present invention has been shown and described with reference to certain preferred embodiments thereof, it will be understood by those skilled in the art that various changes in form and details may be made therein without departing from the scope of the present invention as defined by the appended claims.

## Claims

1. An apparatus for sensing rotation angle in a portable terminal, comprising:
a first motion sensor for measuring an up/down rotation angle and a left/right rotation angle of a first body;
a second motion sensor for measuring an up/down rotation angle and a left/right rotation angle of a second body which is connected to the first body; and
a controller for measuring up/down rotation angle of the second body based on the first body using the difference between the up/down rotation angle of the second body measured from the second motion sensor and the up/down rotation angle of the first body measured from the first motion sensor, and for measuring left/right rotation angle of the second body based on the first body using the difference between the left/right rotation angle of the second body measured from the second motion sensor and the left/right rotation angle of the first body measured from the first motion sensor.

2. The apparatus of claim 1, wherein the up/down rotation angle is the rotation status of an X-axis of the portable terminal and the left/right rotation angle is the rotation status of a Y-axis of the portable terminal when a Z-axis lies in a direction of gravity.

3. The apparatus of claim 1 or 2, wherein the first body is a main body and the second body is a folder in a folder-type portable terminal.

4. A method for sensing rotation angle in a portable terminal, comprising:
measuring an up/down rotation angle and a left/right rotation angle of a first body;
measuring an up/down rotation angle and a left/right rotation angle of a second body which is connected to the first body; and
measuring up/down rotation angle of the second body based on the first body using the difference between the up/down rotation angle of the second body measured from a second motion sensor and the up/down rotation angle of the first body measured from a first motion sensor; and
measuring left/right rotation angle of the second body based on the first body using the difference between the left/right rotation angle of the second body measured from the second motion sensor and the left/right rotation angle of the first body measured from the first motion sensor.

5. The method of claim 4, wherein the up/down rotation angle is the rotation status of an X-axis of the portable terminal and the left/right rotation angle is the rotation status of a Y-axis of the portable terminal when a Z-axis lies in a direction of gravity.

6. The method of claim 4 or 5, wherein the first body is a main body and the second body is a folder in a folder-type portable terminal.

7. An apparatus for sensing rotation angle of a folder in a portable terminal, comprising:
a first motion sensor for measuring a roll which is an up/down rotation angle of a main body and a pitch which is a left/right rotation angle of the main body;
a second motion sensor for measuring a roll which is an up/down rotation angle of a folder and a pitch which is a left/right rotation angle of the folder; and
a controller for measuring up/down and left/right rotation angle of the folder based on the main body using the difference between the rolls and pitches measured from the first motion sensor and the second motion sensor.

8. The apparatus of claim 7, wherein the up/down rotation angle is the rotation status of an X-axis of the portable terminal and the left/right rotation angle is the rotation status of a Y-axis of the portable terminal when Z-axis lies in a direction of gravity.

9. The apparatus of claim 7 or 8, wherein an up/down rotation angle of the folder based on the main body is measured from the difference between a pitch of the folder and a pitch of the main body, and left/right rotation angle of the folder based on the main body is measured from the difference between a roll of the folder and a roll of the main body.

10. A method for sensing rotation angle of a folder in a folder-type portable terminal, comprising:
measuring a roll which is an up/down rotation angle of a main body and a pitch which is a left/right rotation angle of the main body;
measuring a roll which is an up/down rotation angle of a folder and a pitch which is a left/right rotation angle of the folder; and
subtracting the roll and pitch of the main body from the roll and pitch of folder and measuring up/down and left/right rotation angles between the main body and the folder.

11. The method of claim 10, wherein the up/down rotation angle is the rotation status of an X-axis of the portable terminal and the left/right rotation angle is the rotation status of a Y-axis of the portable terminal when a Z-axis lies in a direction of gravity.

12. The method of claim 10 or 11, wherein the up/down rotation angle of the folder based on the main body is measured from the difference between a pitch of the folder and a pitch of the main body, and left/right rotation angle of the folder based on the main body is measured from the difference between a roll of the folder and a roll of the main body.

13. A computer-readable recording medium having recorded thereon a program for sensing rotation angle of a folder in a folder-type portable terminal, comprising:
a first code segment, for causing a computing device to measure a roll which is an up/down rotation angle of a main body and a pitch which is a left/right rotation angle of the main body;
a second code segment, for causing a computing device to measure a roll which is an up/down rotation angle of a folder and a pitch which is a left/right rotation angle of the folder; and
a third code segment, for causing a computing device to subtract the roll and pitch of the main body from the roll and pitch of the folder and measuring up/down and left/right rotation angles between the main body and the folder.

14. A computer-readable recording medium having recorded thereon a program for sensing rotation angle of a second body in a portable terminal, comprising:
a first code segment, for causing a computing device to measure a roll which is an up/down rotation angle of a first body and a pitch which is a left/right rotation angle of the first body;
a second code segment, for causing a computing device to measure a roll which is an up/down rotation angle of a second body and a pitch which is a left/right rotation angle of the second body connected to the first body; and
a third code segment, for causing a computing device to subtract the roll and pitch of the first body from the roll and pitch of the second body and measuring up/down and left/right rotation angles between the first body and the second body.
